Europäisches Patentamt

European Patent Office

Office européen des brevets

(19)

(11) Veröffentlichungsnummer : **0 026 451**
**B1**

(12) **EUROPÄISCHE PATENTSCHRIFT**

(45) Veröffentlichungstag der Patentschrift :
01.06.83

(51) Int. Cl.³ : **G 11 B 5/02**

(21) Anmeldenummer : 80105750.6

(22) Anmeldetag : 24.09.80

(54) **Schaltungsanordnung zum Schutze von auf einem magnetischen Aufzeichnungsträger gespeicherten Daten.**

(30) Priorität : 26.09.79 DE 2938996

(43) Veröffentlichungstag der Anmeldung :
08.04.81 Patentblatt 81/14

(45) Bekanntmachung des Hinweises auf die Patenterteilung : 01.06.83 Patentblatt 83/22

(84) Benannte Vertragsstaaten :
**AT BE CH FR GB IT LI LU NL**

(56) Entgegenhaltungen :
**DE A 1 449 307**
**DE A 1 921 178**
**IBM TECHNICAL DISCLOSURE BULLETIN, Band
18, Nr. 9. Februar 1976, Seiten 2814-2816 New
York, U.S.A. J.A. CHALOUPKA et al. : « Electronic
file protect system »**

(73) Patentinhaber : **SIEMENS AKTIENGESELLSCHAFT
Berlin und München Wittelsbacherplatz 2
D-8000 München 2 (DE)**

(72) Erfinder : **Gottwald, Winfried
Kirchplatz 6 b
D-8033 Martinsried (DE)**

Jouve, 18, rue St-Denis, 75001 Paris, France

EP 0 026 451 B1

Schaltungsanordnung zum Schutze von auf einem magnetischen Aufzeichnungsträger gespeicherten Daten

Die Erfindung bezieht sich auf eine Schaltungsanordnung zum Schutz von auf einem magnetischen Aufzeichnungsträger, insbesondere Magnetband gespeicherten Daten entsprechend dem Oberbegriff des Anspruchs 1.

Es wurde bereits eine Schaltungsanordnung zum Schutz von auf einem magnetischen Aufzeichnungsträger gespeicherten Daten gegen Einwirkungen des Lösch- bzw. Schreibkopfes beim Ein- und Ausschalten einer Gerätestromversorgung vorgeschlagen, bei der ein Löschstromschalter bzw. Schreibverstärker über logische Schaltungen gesteuert werden. Dort ist ein Komparator vorgesehen, dessen Versorgungsspannungen ihren Nennwert außer im normalen Betrieb auch dann aufweisen, wenn beim Ein- oder Ausschalten der Gerätestromversorgung die logischen Schaltungen einen instabilen Bereich durchlaufen. Ein den Löschstromschalter bzw. die Schreibverstärker sperrendes Ausgangssignal wird erzeugt, wenn die Versorgungsspannung für die logischen Schaltungen unter einem Referenzwert liegt. Diese Schaltungsanordnung ist gegenstand der europäischen Patentanmeldung EP-A1-6142, die unter stihel 54 (3) fällt.

Die Verwendung eines einzigen Komparators zur Erzeugung eines sperrenden Ausgangssignals sowohl für den Löschstromschalter als auch für die Schreibverstärker in einem Magnetbandgerät ist immer dann vorteilhaft, wenn von den logischen Schaltungen ein gemeinsames Sperrsignal für den Löschstromschalter und die Schreibverstärker erzeugt wird.

Diese Lösung ist aber dann nicht angebracht, wenn aus Aufwandsgründen in den logischen Schaltungen darauf verzichtet wird oder werden muß, ein gemeinsames Sperrsignal für den Löschstromschalter und die Schreibverstärker zu erzeugen.

Aus der DE-OS 19 21 178 ist es bekannt, zum Schutze von auf einem magnetischen Aufzeichnungsträger gespeicherten Daten einen Löschgenerator zu überwachen, in dem die Ausgangsspannung des Löschgenerators in einer Vergleicherschaltung mit einem Sollwert verglichen wird. Bei Ungleichheit wird eine Ausfallmeldung abgegeben. Diese bekannte Schaltungsanordnung dient dazu, die Funktionsfähigkeit eines Löschgenerators zu überprüfen, in dem die Ausgangsspannung des Löschgenerators überwacht wird. Eine Unterbrechung oder ein Kurzschluß der Zuleitungen zu dem Magnetkopf oder der Magnetkopfwicklung selbst wird nur teilweise erkannt. Besondere Vorkehrungen zum Schutz der gespeicherten Daten bei einem Ein- oder Ausschalten der Gerätestromversorgung, insbesondere in einem Störungsfall werden bei dieser bekannten Schaltungsanordnung nicht getroffen.

Der Erfindung liegt daher die Aufgabe zugrunde, eine Schaltungsanordnung anzugeben, die auch dann einen Schutz der auf dem magnetischen Aufzeichnungsträger gespeicherten Daten bewirkt, wenn kein gemeinsames Sperrsignal für den Löschstromschalter und die Schreibverstärker vorhanden ist.

Erfindungsgemäß wird diese Aufgabe durch die im kennzeichnenden Teil des Anspruchs 1 angegebenen Merkmale gelöst.

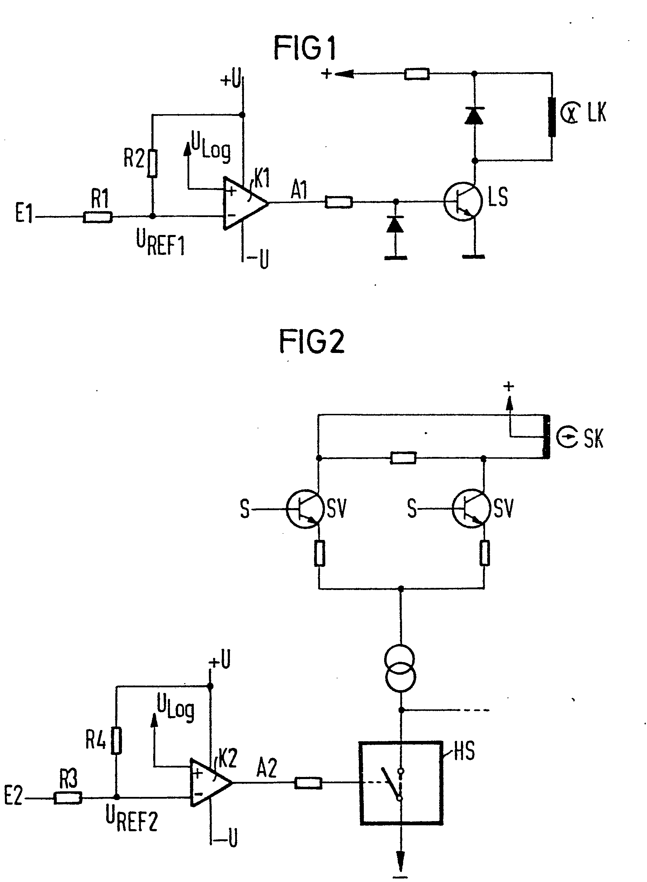

Ausgestaltungen ergeben sich aus den Unteransprüchen. Nachfolgend wird ein Ausführungsbeispiel der Erfindung anhand der Zeichnung beschrieben.

Die Zeichnung zeigt einen Löschkopf LK und einen Schreibkopf SK, wie sie in üblicher Weise in Magnetbandgeräten Anwendung finden. Der Löschkopf LK wird über einen Löschstromschalter LS angesteuert der von einem an seiner Basis anliegenden Signal aufgesteuert bzw. gesperrt wird. Der Schreibkopf SK wird durch die Schreibverstärkerendstufe SV, hier in bekannter Weise zweifach vorhanden, über einen Hauptschalter HS und, der Einfachheit halber nicht dargestellte, Vorverstärkerstufen angesteuert.

Es ist ein separater Komparator K1 zum Erzeugen eines sperrenden Ausgangssignals A1 für den Löschstromschalter LS und ein separater Komparator K2 zum Erzeugen eines sperrenden Ausgangssignals A2 für den Schreibverstärker SV vorgesehen. Die Komparatoren K1 und K2 bilden die Ausgangssignale A1 bzw. A2 durch einen Vergleich der Versorgungsspannung $U_{log}$ für die logischen Schaltungen des Gerätes mit einer Referenzspannung $U_{REF}$. Das Signal A1 sperrt den Löschstromschalter LS und das Signal A2 den Schreibverstärker SV immer dann, wenn die Versorgungsspannung $U_{log}$ für die logischen Schaltungen des Gerätes unter einem festgelegten Minimalwert liegt. Wesentlich ist dabei, daß die Betriebsspannungen $+ U$ und $- U$ für die Komparatoren K1 bzw. K2 und die Referenzspannung $U_{REF}$ bei einem Einschaltvorgang der Gerätestromversorgung ihren jeweiligen Nennwert erreichen, bevor die logischen Schaltungen in ihre instabile Phase geraten, bzw. bei einem Ausschaltvorgang der Gerätestromversorgung ihren Nennwert solange behalten, bis die instabile Phase der logischen Schaltungen abgeklungen ist. Die Schaltsignale E1 für den Löschstromschalter LS werden dem Komparator K1 zugeführt und die Schaltsignale E2 für den Schreibverstärker SV bzw. den vorgeschalteten Hauptschalter HS werden dem Komparator K2 direkt zugeführt.

Vorteilhafterweise wird die Referenzspannung $U_{REF}$ aus der Betriebsspannung $+ U$ für den Komparator K1 bzw. K2 und dem jeweiligen Signal E1 bzw. E2 am Eingang abgeleitet. Zu diesem Zweck ist bei der dargestellten Schaltungsanordnung der negative Eingang des Komparators K1 über einen Widerstand R1 mit dem Eingang E1 und andererseits über einen Widerstand R2 mit der Versorgungsspannung $+ U$ des Komparators K1 verbunden. In entsprechender Weise ist der positive Eingang des Komparators K2 über einen Widerstand R3 mit dem Eingang und außerdem über einen Widerstand R4 mit der Versorgungsspannung + U verbunden. Hiermit läßt sich folgende Wirkungsweise erzielen: Im aktiven Zustand wird der Spannungsteiler R1/R2 bzw. R3/R4 an die Spannung O Volt gelegt. Dann herrscht an dem jeweiligen Referenzeingang des Komparators die Referenzspannung $U_{REFmin}$. Wenn in diesem Augenblick die Versorgungsspannung für die logischen Schaltungen $U_{log}$ bereits den Wert $U_{REFmin}$ überschritten hat, führt dies dazu, daß am Ausgang des Komparators K1 bzw. K2 ein Signal A1 bzw. A2 entsteht, welches den Löschstromschalter LS bzw. den Hauptschalter HS für den Schreibverstärker SV freigibt.

Im inaktiven Zustand, d.h. wenn das Eingangssignal E1 bzw. E2 ein Signal für die Sperrung des Schreibverstärkers SV bzw. den Löschstromschalter LS enthält, nehmen die Referenzspannungen $U_{REF}$ 1, 2, die Betriebsspannung + U der Komparatoren K1 bzw. K2 an. Wenn auch in diesem Fall die Versorgungsspannung $U_{log}$ für die logischen Schaltungen des Gerätes bereits ihren Endwert erreicht hat, entsteht am Ausgang des Komparators K1 bzw. K2 ein Ausgangssignal A1 bzw. A2, welches den Löschstromschalter LS bzw. den Hauptschalter HS für den Schreibverstärker SV sperrt. Diese Betriebsweise im normalen Betriebszustand, d.h. die Freigabe bzw. die Sperrung von Löschstromschalter LS bzw. Schreibverstärker SV wird jedoch immer dann blockiert, wenn die Versorgungsspannung $U_{log}$ für die logischen Schaltungen des Gerätes den vorgegebenen Minimalwert von $U_{REF}$ unterschreitet bzw. noch nicht überschritten hat. In diesem Fall wird der Schreibverstärker SV über seinen Hauptschalter HS bzw. der Löschstromschalter LS unabhängig vom Zustand des jeweiligen Eingangssignals E1 bzw. E2 dadurch gesperrt, daß am Ausgang der Komparatoren K1 bzw. K2 ein Sperrsignal A1 bzw. A2 erzeugt wird.

**Ansprüche**

1. Schaltungsanordnung zum Schutz von auf einem magnetischen Aufzeichnungsträger, insbesondere Magnetband gespeicherten Daten gegen Einwirken des Lösch- bzw. Schreibkopfes beim Ein- und Ausschalten einer Gerätestromversorgung, wobei Löschstromschalter bzw. Schreibverstärker über logische Schaltungen gesteuert werden, dadurch gekennzeichnet, daß ein Komparator (K1) dem Löschstromschalter (LS) und ein weiterer Komparator (K2) den Schreibverstärkern (SV) vorgeschaltet ist, deren Versorgungsspannungen ihren Nennwert außer im normalen Betrieb auch dann aufweisen, wenn beim Ein- oder Ausschalten der Gerätestromversorgung die logischen Schaltungen einen instabilen Bereich durchlaufen und daß die Komparatoren (K1, K2) an den Löschstromschalter (LS) bzw. an die Schreibverstärker (SV) sperrende Ausgangssignale (A1 bzw. A2) abgeben, wenn die Versorgungsspannung für die logischen Schaltungen unter einem Referenzwert liegt oder wenn die logischen Schaltungen entsprechende Schaltsignale (E1 bzw. E2) abgeben.

2. Schaltungsanordnung nach Anspruch 1, dadurch gekennzeichnet, daß mit dem Ausgangssignal (A2) des den Schreibverstärkern (SV) zugeordneten Komparators (K2) ein den Schreibverstärkern (SV) vorgeschalteter Hauptschalter (HS) gesperrt bzw. aufgesteuert wird.

3. Schaltungsanordnung nach Anspruch 1 oder Anspruch 2, dadurch gekennzeichnet, daß das jeweilige Schaltsignal (E1, E2) einem dem Referenzwerteingang des entsprechenden Komparators (K1, K2) vorgeschalteten Summierer (R1, R2 bzw. R3, R4) zugeführt wird, dessen anderer Eingang an einer Versorgungsspannung (+ U) des Komparators (K1, K2) liegt, und daß das Schaltsignal (E1, E2) zur Sperrung des Löschstromschalters (LS) bzw. der Schreibverstärker (SV) über den jeweiligen Komparator (K1, K2) einen den Nennwert der Versorgungsspannung ($U_{Log}$) der logischen Schaltungen unterschneitenden maximalen Referenzwert ($U_{REFmax}$) erzeugt.

**Claims**

1. A circuit arrangement for protecting items of data stored on a magnetic data carrier, in particular a magnetic tape, from the influence of the erasing or the recording head, as the case may be, during switching on or off of a device current supply, where the erasing current switch and recording amplifier are controlled via logic circuits, characterised in that a comparator (K1) precedes the erasing current switch (LS) and a further comparator (K2) precedes the recording amplifiers (SV), the supply voltages of which comparators exhibit their nominal value not only during normal operation but also whenever the logic circuits pass through an unstable range at switching on or off of the device current supply, and that the comparators (K1, K2) supply the erasing current switch (LS) and the recording amplifiers (SV) with inhibiting output signals (A1 and A2) when the supply voltage for the logic circuits lie below a reference value or when the logic circuits emit corresponding switching signals (E1 and E2).

2. A circuit arrangement as claimed in Claim 1, characterised in that the output signal (A2) of the comparator (K2) assigned to the recording amplifiers (SV) serves to inhibit or open a main switch (HS) which precedes the recording amplifiers (SV).

3. A circuit arrangement as claimed in Claim 1 or 2, characterised in that the switching signal in question (E1, E2) is fed to an adder (R1, R2 and R3, R4) which precedes the reference value input of the corresponding comparator (K1, K2) whose other input is connected to a supply voltage (+ U) of the comparator, and that via the comparator in question (K1, K2) the switching signal (E1, E2) which serves to block the erasing current switch (LS) and the recording amplifiers (SV) produces a maximum reference value (U$_{REFmax}$) which falls below the nominal value of the supply voltage (U$_{log}$) of the logic circuit.

## Revendications

1. Montage pour la protection de données mémorisées sur un support d'enregistrement magnétique, plus particulièrement sur une bande magnétique, contre l'action de la tête d'effacement d'enregistrement lors du branchement et du débranchement d'une alimentation en courant de l'appareil, le commutateur du courant d'effacement ou les amplificateurs d'écriture étant commandés par l'intermédiaire de circuits logiques, caractérisés par le fait qu'un comparateur (K1) est monté en amont du commutateur du courant d'effacement et un second comparateur (K2) est monté en amont des amplificateurs d'écriture (SV), dont les tensions d'alimentation présentent leur valeur nominale, en dehors du fonctionnement normal, également lorsque, lors du branchement ou du débranchement de l'alimentation en courant de l'appareil, les circuits logiques passent par une zone instable et que les comparateurs (K1, K2) fournissent au commutateur du courant d'effacement (LS) ou aux amplificateurs d'écriture (SV) des signaux de sortie de blocage (A1, ou A2) lorsque la tension d'alimentation pour les circuits logiques se situe en dessous d'une valeur de référence ou lorsque les circuits logiques émettent des signaux correspondants de commutation (E1 ou E2).

2. Montage selon la revendication 1, caractérisé par le fait qu'avec le signal de sortie (A2) du comparateur (K2) qui est associé aux amplificateurs d'écriture (SV) est bloqué ou commandé un commutateur principal (HS) qui est monté en amont des amplificateurs d'écriture (SV).

3. Montage suivant la revendication 1 ou la revendication 2, caractérisé par le fait que le signal de commutation concerné (E1, E2) est appliqué à un dispositif de sommation (R1, R2 ; R3, R4) monté en amont de l'entrée de la valeur de référence du comparateur correspondant (K1, K2), et dont l'autre entrée est reliée à une tension d'alimentation du comparateur (K1, K2) et que le signal de commutation (E1, E2) produit, pour la fermeture du commutateur du courant d'effacement (LS) ou des amplificateurs d'écriture (SV), par l'intermédiaire du comparateur concerné (K1, K2), une valeur de référence maximale (U$_{REFmax}$) située en dessous de la valeur nominale de la tension d'alimentation (U$_{log}$) des circuits logiques.

FIG 1

FIG 2